# FASCICULE DE BREVET EUROPEEN

(11) **EP 0 348 285 B1**
(45) Date de publication et mention de la délivrance du brevet: **22.09.1993**
(21) Numéro de dépôt: 89401710.2
(22) Date de dépôt: 16.06.1989
(51) Int. Cl.: H02G 3/06

(54) **Dispositifs pour raccorder bout à bout des profilés**
Vorrichtungen zum Verbinden der Enden von Profileisen
Devices for the end-to-end coupling of extrusions

(30) Priorité: 21.06.1988 FR 8808304
(43) Date de publication de la demande: 27.12.1989
(73) Titulaire: CONSTRUCTIONS ELECTRIQUES DE LA SEINE, F-92130 Issy les Molineaux (FR)
(72) Inventeur: Petit, Etienne, F-92130 Issy Les Moulineaux (FR)
(74) Mandataire: Behaghel, Pierre

(56) Documents cités:
- DE-A- 3 636 412
- US-A- 3 451 033

## Description

L'invention est relative aux dispositifs qui sont destinés à raccorder bout à bout des profilés dont la section droite comprend au moins un L, ces profilés étant notamment des gouttières métalliques destinées à recevoir des câbles électriques et appelées pour cette raison "gouttières de câblage" ou "chemins de câbles"

On rappelle que ces raccordements bout à bout sont généralement effectués à l'aide d'éclisses ou plaquettes plates ou repliées qui sont fixées sur les profilés à raccorder par boulonnage de systèmes boulons-écrous ou par rabattement de pattes dans des perforations appropriées.

Ces raccordements présentent des avantages, mais également un certain nombre d'inconvénients parmi lesquels les suivants :
- les raccords effectués sont rigides et exigent un alignement mutuel rigoureux et permanent des deux profilés raccordés, ce qui exclut toute possibilité de désalignement de ces profilés lors du raccordement ou après celui-ci,
- les raccords rigides considérés transmettent d'un profilé à l'autre les vibrations éventuellement engendrées dans l'un d'eux, ce qui peut être une source de fatigue de l installation et de bruit,
- la mise en place des dispositifs de raccordement considerés exige fréquemment une bonne accessibilité de la zone de raccordement selon certaines directions transversales, notamment en vue du vissage des boulons de fixation à l'aide de clés appropriées, ce qui est parfois exclu, en particulier lorsque les profilés à raccorder sont disposés à proximité d'une cloison verticale.

Pour remédier à ces inconvénients, il a déjà été envisagé de recourir à un manchon souple relativement épais -savoir d'épaisseur supérieure au mm-, enveloppant jointivement les deux extrémités du profilé à raccorder.

Mais dans les modes de réalisation proposés pour ce manchon souple (voir document DE-A-3 636 412),
- le manchon présente la forme d'un profilé en H ouvert vers les deux profilés à raccorder,
- il est constitué en un matériau plastique propre à subir une contraction par chauffage.

En d'autres termes, le montage de ce manchon implique son chauffage, lequel chauffage raccourcit la barre centrale du H constitutif du manchon d'au moins 20 % de sa longueur.

Ce raccourcissement est nécessaire car l'écartement initial des ailes du manchon est supérieur à l'épaisseur des profilés à raccorder : il se traduit par une ferme application des ailes du manchon contre les faces en regard des profilés à raccorder.

L'invention a pour but de remédier à l'ensemble des inconvénients présentés par ces différents modes de réalisation antérieurs.

A cet effet, les dispositifs de raccordement du genre en question selon l'invention se présentent encore comme des manchons en matière plastique assurant le raccordement de deux profilés par recouvrement des extrémités de ces profilés et présentant une épaisseur supérieure au millimètre, et ils sont essentiellement caractérisés en ce que lesdits manchons présentent un contour fermé, une longueur supérieure à 20 mm et sont évidés de part en part, en ce que leur matériau constitutif est élastique et en ce que la section droite du volume intérieur de ces manchons avant usage est plus petite que la section droite des profilés à raccorder.

Dans des modes de réalisation intéressants, on a recours en outre à l'une et/ou à l'autre des dispositions suivantes :
- la dureté du manchon est comprise entre 30 et 95 shores A,
- l'une au moins des extrémités du manchon est légèrement évasée.

L'invention comprend, mises à part ces dispositions principales, certaines autres dispositions qui s'utilisent de préférence en même temps et dont il sera plus explicitement question ci-après.

Dans ce qui suit l'on va décrire des modes de réalisation préférés de l'invention, en se référant au dessin ci-annexé d'une manière bien entendu non limitative.

La figure 1, de ce dessin, montre en vue perspective l'ensemble de deux extrémités de gouttières perforées raccordées bout à bout par un manchon souple établi selon l'invention.

La figure 2 est une coupe partielle de la figure 1 selon la flèche II.

La figure 3 montre schématiquement un appareil. établi selon l'invention pour fabriquer un manchon souple de raccordement du type de celui visible sur les figures 1 et 2.

Les profilés à raccorder qui sont illustrés sur les dessins sont des gouttières de câblage 1 profilées en U dont non seulement le fond horizontal 2, mais aussi les ailes verticales 3, sont perforés par des rangées longitudinales de lumières 4 allongées longitudinalement.

Pour raccorder bout à bout deux telles gouttières, on a recours, selon l'invention, à un manchon 5 en une matière plastique relativement souple évidé de part en part, présentant un contour continu fermé et propre à recevoir jointivement les deux extrémités juxtaposées bout à bout desdites gouttières.

En d'autres termes le volume évidé dans le manchon 5 présente une forme étroite complémentaire de celle des deux extrémités à raccorder, savoir dans le cas présent la forme d'un U dont le fond et les ailes sont relativement minces.

Selon un mode de réalisation qui peut être préféré dans certains cas, le volume évidé en question à l'intérieur du manchon est légèrement plus étroit que les extrémités de profilés à loger : dans ce cas, après mise en place du manchon sur lesdites extrémités, celui-ci tend à se rétracter légèrement en adhérant intimement contre les faces desdites extrémités.

En somme le manchon 5 présente l'aspect général d'un bandeau entourant jointivement l'ensemble des deux extrémités de profilés juxtaposées bout à bout, sur la totalité du pourtour de cet ensemble, c'est-à-dire aussi bien dans ses angles rentrants que sur ses arêtes.

La longueur L du manchon 5 est suffisante pour que le raccord désiré soit correctement assuré et ne soit pas trop facilement sujet à des démontages par déboîtement longitudinal.

Cette longueur L est supérieure à 20 mm, étant en général de l'ordre de 60 à 100 mm.

L'épaisseur e dudit manchon est relativement grande, étant généralement supérieure à 1 mm et de préférence de l'ordre de 2 à 3 mm.

Le manchon en question est relativement souple, sa dureté étant comprise entre 30 et 95 shores A.

Pour mettre en place un tel manchon autour des deux extrémités de profilé à raccorder, on commence par l'enfiler longitudinalement sur l'une de ces extrémités, jusqu'à une distance égale à la moitié de sa longueur totale, puis on introduit longitudinalement l'extrémité du second profilé dans la moitié du manchon qui demeure alors non garnie.

Avec un tel manchon de raccordement, les inconvénients signalés ci-dessus sont supprimés :
- vu la souplesse dudit manchon, il est possible de désaligner légèrement les deux profilés mutuellement raccordés en inclinant légèrement l'une sur l'autre leurs lignes moyennes longitudinales selon l'une quelconque des directions possibles, aussi bien horizontales que verticales, et ce au moment même où l'on effectue le raccordement, ou après ce raccordement,
- la mollesse relative du manchon permet d'amortir le transfert mutuel, de l'un des profilés à l'autre, des vibrations qui sont éventuellement appliquées sur l'un d'eux,
- la mise en place du manchon peut être effectuée longitudinalement sur un profilé déjà monté, même si ce profilé est disposé à proximité immédiate d'un mur ou autre obstacle qui s'oppose à son accessibilité latérale.

Pour fabriquer les manchons souples décrits ci-dessus, on procède avantageusement par trempage.

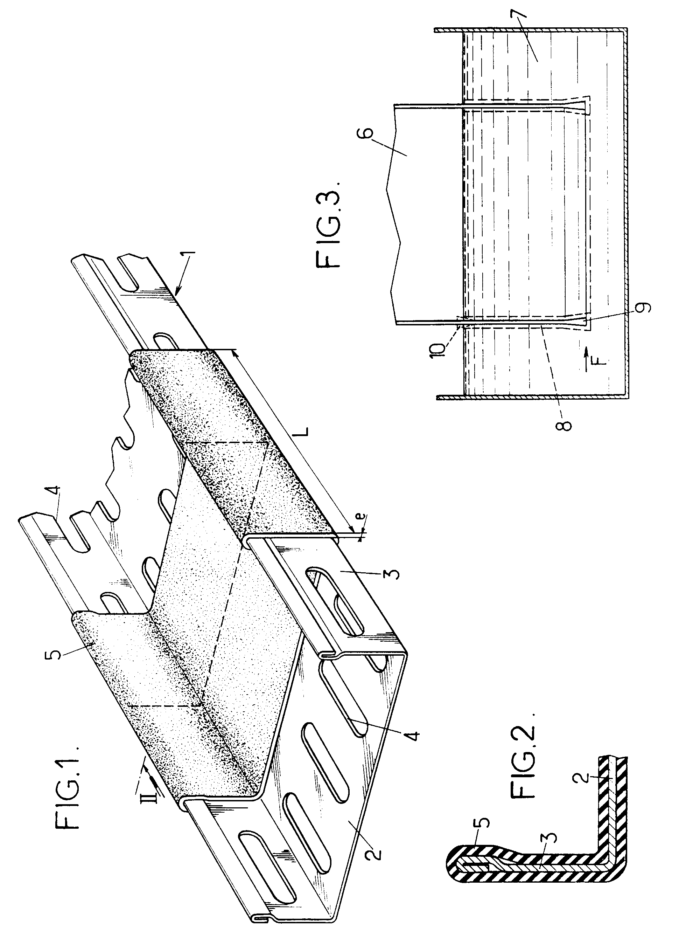

A cet effet on a recours à un noyau, monture ou ébauche 6 (figure 3) constitué par un profilé présentant la même section droite que les profilés à raccorder, mais non perforé.

On enduit cette ébauche d'un agent de démoulage, puis on la chauffe, à une température comprise notamment entre 170 et 180°C, et on la trempe dans un bain relativement visqueux de plastisol ou autre matière plastique ou élastomère 7, jusqu'à une profondeur égale à la longueur L désirée pour le manchon à fabriquer.

On rappelle que le plastisol est une dispersion d'une résine vinylique (généralement du polychlorure de vinyle) dans un plastifiant liquide.

Après une durée d'immersion suffisante, on dégage l'ébauche dont le bas est alors recouvert d'une peau sirupeuse 8 présentant une épaisseur de l'ordre du millimètre et, après l'avoir laissé égoutter, on la passe à l'étuve pour solidifier la peau par polymérisation à chaud.

On renouvelle plusieurs fois cette suite d'opérations pour obtenir une peau stratifiée suffisamment épaisse --la durée cumulée des trempages étant généralement comprise entre 10 et 30 minutes-- puis on laisse refroidir, on dégage le manchon borgne obtenu de l'ébauche et on découpe son fond, au niveau de la flèche F sur la figure 3 de façon à ouvrir ledit manchon de part en part.

Pour évaser l'une des extrémités de ce manchon et faciliter ainsi l'emmanchement de cette extrémité sur le profilé correspondant, on épaissit avantageusement en 9 le bord inférieur de l'ébauche 6.

Un évasement analogue peut également être réalisé à l'autre extrémité du manchon terminé en prévoyant sur l'ébauche des surépaisseurs 10 appropriées.

On peut incorporer au bain 7 tous additifs désirables tels que des pigments ou que des produits améliorant la résistance au feu (alumine hydratée, chlorure d'antimoine...).

Pour maintenir le manchon en place sur les profilés qu'il raccorde mutuellement, on peut interposer entre ce manchon et ces profilés une colle appropriée telle qu'une colle vinylique.

En suite de quoi, et quel que soit le mode de réalisation adopté, on obtient finalement un dispositif de raccordement de profilés dont la constitution, la mise en place, la fabrication et les avantages résultent suffisamment de ce qui précède.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notamment celles où les profilés à raccorder mutuellement présenteraient, en section droite, une forme différente d'un U, et notamment celle d'un U dont les extrémités des ailes seraient refermées vers l'intérieur (profilés dits "en C") ou dont les extrémités des ailes seraient au contraire ouvertes vers l'extérieur (profilés dits "en Ω"), ou encore celle d'un simple L, les profilés considérés étant alors de simples cornières, comme il est connu pour la réalisation de gouttières en "échelle", formées de deux cornières parallèles réunies par des barreaux transversaux.

## Revendications

1. Dispositif pour raccorder bout à bout des profilés (1) dont la section droite comprend au moins un L, de préférence des gouttières de câblage, dispositif se présentant comme un manchon en matière plastique (5) assurant le raccordement desdits profilés (1) par recouvrement des extrémités des profilés (1) et présentant une épaisseur supérieure au millimètre, caractérisé en ce que ledit manchon (5) présente un contour fermé, une longueur totale supérieure à 20 mm et est évidé de part en part, en ce que son matériau constitutif est élastique et en ce que la section droite du volume intérieur du manchon avant usage est plus petite que la section droite des profilés (1) à raccorder.

2. Dispositif de raccordement selon la revendication 1, caractérisé en ce que la dureté du manchon est comprise entre 30 et 95 shores A.

3. Dispositif de raccordement selon l'une quelconque des revendications 1 et 2, caractérisé en ce que l'une au moins des extrémités du manchon (5) est évasée.

## Claims

1. Device for the end-to-end coupling of extrusions (1) the transverse section of which comprises at least an L, preferably gutters for cables, said device looking as a plastic sleeve (5) which couples said extrusions (1) by overlapping the ends of the extrusions (1) and has a thickness higher than 1 mm, characterized in that said sleeve (5) has a closed outline, a total length higher than 20 mm and is hollowed through and through, in that its constituent material is elastic and in that the transverse section of the inner volume of the sleeve before use is smaller than the transverse section of the extrusions (1) to be coupled.

2. Coupling device according to claim 1, characterized in that the hardness of the sleeve is comprised between 30 and 95 shores A.

3. Coupling device according to any one of claims 1 and 2, characterized in that one at least of the ends of the sleeve (5) is flared.

## Patentansprüche

1. Vorrichtung zum Verbinden der Enden von Profilen (1), vorzugsweise von Verkabelungsschienen, mit wenigstens einem L-förmigen Querschnittsabschnitt, die aus einer Kunststoffhülse (5) besteht, die die Verbindung der Profile (1) dadurch sicherstellt, daß sie die Enden der Profile bedeckt und eine oberhalb 1 mm liegende Stärke hat, dadurch gekennzeichnet, daß die Hülse (5) eine geschlossene Kontur, eine über 20 mm liegende Gesamtlänge aufweist, und durchgehend ausgenommen ist, daß das Material, aus dem die Hülse besteht, elastisch ist und daß der Querschnitt des Innenraums der Hülse vor ihrer Verwendung kleiner ist als der Querschnitt der zu verbindenden Profile (1).

2. Vorrichtung nach Anspruch 1, dadurch gekennzeichnet, daß die Härte der Hülse zwischen 30 und 95 Shore A liegt.

3. Vorrichtung nach einem der Ansprüche 1 und 2, dadurch gekennzeichnet, daß wenigstens eins der Enden der Hülse (5) bauchig ausgebildet ist.
